# EUROPÄISCHE PATENTSCHRIFT

(11) **EP 1 810 039 B1**
(45) Veröffentlichungstag und Bekanntmachung des Hinweises auf die Patenterteilung: **12.06.2019**
(21) Anmeldenummer: 05808265.2
(22) Anmeldetag: 10.11.2005
(51) Int. Cl.: G01N 35/02

(54) **VORRICHTUNG ZUR VOLLAUTOMATISCHEN DURCHFÜHRUNG EINES EINZELIMMUNOASSAYS**
DEVICE FOR CARRYING OUT AN INDIVIDUAL IMMUNOASSAY IN A FULLY AUTOMATIC MANNER
DISPOSITIF PERMETTANT LA CONDUITE AUTOMATIQUE D'UN IMMUNO-ESSAI INDIVIDUEL

(30) Priorität: 11.11.2004 DE 102004054551
(43) Veröffentlichungstag der Anmeldung: 25.07.2007
(73) Patentinhaber: Orgentec Diagnostika GmbH, 55129 Mainz (DE)
(72) Erfinder: BERG, Wigbert, 55131 Mainz (DE); BECKER, Stephan, 64572 Büttelborn (DE)
(74) Vertreter: Weickmann & Weickmann PartmbB
(86) Internationale Anmeldenummer: PCT/EP2005/012060
(87) Internationale Veröffentlichungsnummer: WO 2006/050953

(56) Entgegenhaltungen:
- EP-A- 0 843 176
- EP-A- 1 255 115
- WO-A-01/11374
- WO-A-2004/056665
- US-A- 4 678 752
- US-A- 4 933 147
- US-A- 5 232 665

## Beschreibung

Die Erfindung betrifft eine Vorrichtung, geeignet für die vollautomatische Durchführung eines Einzelimmunoassays zum Nachweis einer biologisch aktiven Substanz in einer Probe, sowie deren Verwendung. Zusätzlich betrifft die Erfindung einen Probestreifen, der zur Durchführung eines Einzelimmunoassays zum Nachweis einer biologisch aktiven Substanz in einer Probe mit Hilfe der oben genannten Vorrichtung geeignet ist, sowie ein diesen Probestreifen umfassendes Kit.

Immunoassays, welche zur Bestimmung von biologisch aktiven Substanzen, wie Antigenen, Antikörpern oder Haptenen, dienen, sind heutzutage in den unterschiedlichsten Bereichen der Technik, wie beispielsweise der medizinischen Diagnostik, weit verbreitet. Zur Bestimmung dieser biologisch aktiven Substanzen bedienen sich die Immunoassays insbesondere der hochspezifischen Antigen-Antikörper-Reaktion. Um sowohl eine qualitative als auch eine quantitative Aussage über die Antigen-Antikörper-Reaktion machen zu können, wird einer der Reaktionspartner mit einer gut nachweisbaren Markierungssubstanz so gekoppelt, dass die immunologischen Eigenschaften der Komponenten weitgehend erhalten bleiben. Als Markierungssubstanz eignen sich Radioisotope (sog. Radioimmunoassay) oder aber auch Enzyme sowie die dazugehörigen Substrate (sog. Enzymimmunoassay, wie z.B. der ELISA). Aufgrund ihrer vorteilhaften Eigenschaften werden jedoch vorzugsweise Enzyme sowie die dazugehörigen Substrate als Markierungssystem in dem sog. Enzymimmunoassay verwendet. Dabei ist dann die Antigen-Antikörper-Reaktion an eine enzymatische Reaktion gekoppelt, wobei entweder Antikörper- oder Antigen-Enzym-Konjugate verwendet werden, welche an die nachzuweisenden, biologisch aktiven Substanzen binden und nach Zugabe eines geeigneten Substrats durch Messung der Enzymaktivität des Konjugats photometrisch oder fluorimetrisch bestimmt werden. Die katalytische Wirkung des Enzyms sorgt nebenbei auch für eine Verstärkung des Messeffekts, da die Antikörper- oder Antigen-Enzym-Konjugate zwar stöchiometrisch an die nachzuweisenden, biologisch aktiven Substanzen binden, aber das Enzym des gekoppelten Konjugats im Laufe der Nachweisreaktion nicht nur ein sondern viele Substrate umsetzen kann. Dies hat jedoch zur Folge, dass für jeden durchzuführenden Immunoassay zunächst eine Kalibrierung mit einer Reihe von Proben (Kalibratoren) verschiedener bekannter Konzentrationen erfolgen muss.

Üblicherweise werden Immunoassays heutzutage in Immunoassay-Vollautomaten durchgeführt. Diese Immunoassay-Vollautomaten arbeiten mit Mikrotiterplatten des 96er Formats, in denen sich 96 Kavitäten für Proben und die Kalibrierung des durchzuführenden Immunoassays befinden. Üblicherweise stehen bei diesen Mikrotiterplatten in der Regel 90 Kavitäten für Proben und 6 Kavitäten für die Kalibrierung des Immunoassays zur Verfügung. Für die Kalibrierung des Immunoassays ist eine Kalibrierungskurve mit Hilfe von Kalibratoren bekannter Konzentrationen zu erstellen, die in der Regel 5 bis 6 Punkte umfasst und deren Validität zusätzlich mit zwei weiteren Kontrollsubstanzen abgesichert wird. Die Durchführung des Immunoassays in den Immunoassay-Vollautomaten mit den in den Kavitäten der Mikrotiterplatte befindlichen Proben, Kalibratoren und Kontrollsubstanzen erfolgt dabei nach folgendem Schema:
- Verdünnen der Proben, Kalibratoren und Kontrollsubstanzen,
- Inkubieren der Proben, Kalibratoren und Kontrollsubstanzen in den mit einem selektiven Bindungspartner der nachzuweisenden, biologisch aktiven Substanz (z.B. Antigene oder Antikörper) beschichteten Kavitäten, so dass eine Bindung der nachzuweisenden, biologisch aktiven Substanz erfolgen kann,
- Auswaschen nicht gebundener Bestandteile der Probe,
- Zugabe eines Nachweisreagenzes, vorzugsweise eines enzymmarkierten Antikörpers oder Antigens, das an die gebundene, nachzuweisende, biologisch aktive Substanz bindet,
- Auswaschen nicht gebundener Nachweismoleküle und
- Zugabe eines Substrats, welches proportional zum Vorhandensein des Nachweisreagenzes farbig umgesetzt wird.

Die für den Immunoassay notwendigen Reagenzien, wie beispielsweise der zur Verdünnung der Proben, Kalibratoren und Kontrollsubstanzen benötigte Puffer sowie die Reagenzien zum Waschen sowie für die Nachweisreaktion, werden in großen Vorratsbehältern in den Immunoassay-Vollautomaten bereitgestellt.

Die derzeit auf dem Markt befindlichen Immunoassay-Vollautomaten weisen jedoch verschiedene Nachteile auf. Ein wesentlicher Nachteil ist, dass alle auf einer Mikrotiterplatte des 96er Formats befindlichen Proben demselben Immunoassay unterzogen, d.h. auf den gleichen Parameter untersucht, werden müssen. Dadurch wird die notwendige Flexibilität in der Diagnostik des auszuführenden Labors stark eingeschränkt, so dass der Einsatz eines Immunoassay-Vollautomaten nur bei einer Auslastung aller 96 Kavitäten der Mikrotiterplatte im Rahmen einer Testreihe mit höherer Probenzahl wirtschaftlich ist. Dies führt jedoch in verschiedenen Situationen zu Problemen, die sich zu Lasten der Analyse sowie des Inhabers der zu analysierenden Probe, wie beispielsweise eines Patienten, auswirken. So müssen beispielsweise bei medizinischen Notfällen einzelne oder eine Gruppe verschiedener Parameter sehr schnell bestimmt werden. Aus Wirtschaftlichkeitsgründen erfolgt dies dann jedoch nicht vollautomatisch, sondern manuell, was zu einem höheren Risiko falscher Ergebnisse als bei einer vollautomatischen Durchführung des Immunoassays führt. Ferner können kleine und mittlere Labors und Kliniken die Proben von Patienten sehr oft nicht zu so großen Testreihen zusammenfassen und müssen die Proben aufgrund der mangelnden Auslastung des Immunoassay-Vollautomaten entweder an größere Labors weiter versenden oder über einen längeren Zeitraum vor der Durchführung des Immunoassays ansammeln. Hierdurch ergibt sich ein nicht hinzunehmender Zeitverlust. Zudem existiert für einige wichtige klinische Parameter bislang nur deshalb noch kein automatisierter Immunoassay, wie beispielsweise für Gangliosid-Antikörper, weil diese Parameter sehr selten auftreten und sich daher für einen Immunoassay in einem Immunoassay-Vollautomaten mit Mikrotiterplatten des 96er Formats nicht eignen.

Einzelne Hersteller von Immunoassay-Vollautomaten haben in letzter Zeit versucht, durch Entwicklung neuer Gerätschaften wenigstens einen Teil der Nachteile der Immunoassay-Vollautomaten mit Mikrotiterplatten des 96er Formats auszuräumen.

So wird z.B. von der Firma DPC Biermann ein Immunoassay-Analyser (IMMULITE®) angeboten, welcher für jede zu untersuchende Probe einzeln einen spezifischen Immunoassay (sog. Einzelimmunoassay) durchführen kann. Dieses Gerät beherbergt, wie auch die zuvor beschriebenen Immunoassay-Vollautomaten, alle für den jeweils durchzuführenden Immunoassay notwendigen Reaktionsreagenzien und Waschlösungen in großen Vorratsbehältern im Gerät, während die Festphase für den Immunoassay in Form von Kugeln in einem versiegelten Testkit vorliegt. Die Bereitstellung aller für den jeweils durchzuführenden Immunoassay benötigter Reagenzien und Waschlösungen in großen Vorratsbehältern im Gerät bringt jedoch den Nachteil mit sich, dass diese Reagenzien und Waschlösungen in den Vorratsbehältern ständig ausgetauscht werden müssen, falls hintereinander verschiedene Immunoassays durchgeführt werden müssen, da die Kapazität an Vorratsbehältern im Gerät begrenzt ist. Das von der Firma DPC Biermann angebotene Gerät hat außerdem den Nachteil, dass es aufgrund der verwendeten Proben und Teströhrchen relativ hohe Probenvolumina benötigt, was beispielsweise im pädiatrischen Bereich, in dem oft autoimmunologische Fragestellungen auftauchen, problematisch ist. Um die Kalibrierung jedes einzelnen mit dem Immunoassay-Analyser durchzuführenden Immunoassays zu vereinfachen, werden Kalibrierungskurven für gängige Immunoassays im Auswertungsprogramm des Gerätes hinterlegt. Dies führte jedoch zu einer geringen Flexibilität beim Einsatz des Immunoassay-Analysers, da bei Einführung neuer Tests zunächst Kalibrierungskurven im Gerät neu hinterlegt werden müssen oder für jeden durchzuführenden Test eine Kalibrierungskurve erstellt werden muss. Ferner weist der Immunoassay-Analyser von der Firma DPC Biermann einen relativ hohen Anschaffungspreis auf, so dass dieses Gerät insbesondere für kleine und mittlere Labors und Kliniken nicht geeignet erscheint.

Des Weiteren bietet die Firma BIOMERIEUX einen Immunoassay-Analyser an, der ebenfalls für die Einzelbestimmung einer Probe durch einen spezifischen Immunoassay geeignet ist. Die für den jeweils durchzuführenden Immunoassay benötigten Reagenzien werden in einem testspezifischen Kit bereitgestellt, während sich die benötigte Waschlösung in einem Vorratsbehälter im Gerät befindet. Der Reaktionsraum, in welchem der jeweilige Immunoassay durchgeführt wird, befindet sich in einem zusätzlichen Kit. Dies erhöht zum Einen den Steuerungsaufwand für das Gerät und zum Anderen den Bedienungsaufwand und die Fehleranfälligkeit für die Durchführung des Immunoassays. Um die Kalibrierung der einzelnen durchzuführenden Immunoassays zu erleichtern, ist für jeden Immunoassay eine Kalibrierungskurve auf dem testspezifischen Kit hinterlegt. Ein Nachteil des von der Firma BIOMERIEUX vertriebenen Immunoassay-Analysers liegt jedoch darin, dass dieses System noch auf wenige Anwendungen in der Assaytechnik beschränkt ist und interne Messungen zeigen, dass das System große Probleme bei der Reproduzierbarkeit der Ergebnisse zeigt. Auch preislich gesehen, scheint der Immunoassay-Analyser der Firma BIOMERIEUX für kleine und mittlere Labors und Kliniken eher wenig attraktiv zu sein.

EP 1 255 115 beschreibt ein Gerät zur automatischen immunochemischen Analyse umfassend mindestens ein Gehäuse zur Aufnahme eines Wells einer Mikrotiterplatte, einen ersten Hohlraum zur Aufnahme der Probe und weitere Kavitäten zur Aufnahme jedes der zur Durchführung des Tests erforderlichen Reagenzien.

US 4,678,752 beschreibt eine automatisierte Analysevorrichtung umfassend eine Einführungsstation zur Aufnahme einer Vielzahl von Reagenzpackungen, die jeweils eine Vielzahl von Behältern aufweisen, von denen mindestens einer eine zu analysierende Probenflüssigkeit enthält und von denen mindestens einer ein flüssiges Reagenz zur Bildung einer Reaktionsmischung mit der Probenflüssigkeit enthält. Weiterhin ist eine Flüssigkeitstransferstation zur Bildung eines Reaktionsgemisches umfasst sowie ein Analysator zur Bestimmung einer Eigenschaft einer Probe.

US 5,232,665 beschreibt eine automatische multilineare Vorrichtung zur Durchführung von Immunoassays von Proben unter Verwendung eines festen Trägers, wobei die Assays gebundene und freie Phasen aufweisen und die gebundene Phase an den festen Träger gebunden ist.

WO 2004/056665 beschreibt eine Kartusche, umfassend einen oder mehrere Flüssigkeitsaufnahmebehälter mit oberen Öffnungen und einen oder mehrere Reaktionsbehälter, die obere Öffnungen aufweisen und Reaktionsfelder bereitstellen, sowie ein Verschluss zum Verschließen von mindestens einer oder mehrerer Öffnungen der Behälter. Auch EP 0 843 176 beschreibt einen Behälter, der für eine Analyseprüfung geeignet ist, der mehrere Flüssigkeitsspeicherbehältnisse aufweiset, die so ausgebildet sind, dass eine quantitative Analyse mit hoher Genauigkeit durchgeführt werden kann.

Zusammenfassend ist bisher also kein geeignetes System zur vollautomatischen Durchführung eines Einzelimmunoassays zum Nachweis einer biologisch aktiven Substanz, wie beispielsweise eines Antikörpers, eines Antigens oder eines Haptens, bekannt, das eine einfache, flexible, schnelle und reproduzierbare Durchführung eines Immunoassays mit einer einzelnen Probe ermöglicht, einen geringen Platzbedarf, geringe Anschaffungskosten sowie einen niedrigen Betriebs- und Wartungsaufwand aufweist und insbesondere für die Autoimmundiagnostik geeignet ist.

Der vorliegenden Erfindung lag daher das Ziel zugrunde, ein System zur vollautomatischen Durchführung eines Einzelimmunoassays zum Nachweis einer biologisch aktiven Substanz bereitzustellen, welches die zuvor genannten Anforderungen erfüllt.

Erfindungsgemäß wird diese Aufgabe gelöst durch eine Vorrichtung, geeignet für die vollautomatische Durchführung eines Einzelimmunoassays zum Nachweis einer biologisch aktiven Substanz in einer Probe unter Verwendung eines Probestreifens, wobei der Probestreifen in ausschließlich linearer Anordnung wenigstens fünf Kavitäten umfasst, von denen wenigstens eine Kavität (i) zur Bereitstellung der zu untersuchenden Probe, wenigstens eine weitere Kavität (ii) als Reaktionsraum zur Durchführung des Einzelimmunoassays, wenigstens eine weitere Kavität (iii) als Reaktionsreagenzienreservoir zur Bereitstellung des (der) für den Einzelimmunoassay benötigten Reaktionsreagenzes (Reaktionsreagenzien) und wenigstens eine weitere Kavität (iv) zur Bereitstellung einer Kontrollsubstanz dienen, wobei der Probestreifen mit einer Folie versiegelt ist, die Folie einen Einzelimmunoassay-spezifischen Code aufweist, der Code zur Erkennung des durchzuführenden Einzelimmunoassays und zur Speicherung der Kalibrierungskurve des durchzuführenden Einzelimmunoassyas dient, und wobei die Vorrichtung umfasst
(a) ein Mittel zur Aufnahme wenigstens eines Probestreifens,
(b) ein Mittel, um den wenigstens einen Probestreifen entlang einer Transferroute zu unterschiedlichen Reaktionsstationen des Einzelimmunoassays zu transportieren, wobei die Reaktionsstationen wenigstens eine Decodierstation, wenigstens eine Pipettierstation, wenigstens eine Waschstation und wenigstens eine Detektionsstation umfassen,
(c) wenigstens ein Mittel zur Decodierung eines Einzelimmunoassay-spezifischen Codes an der wenigstens einen Decodierstation,
(d) wenigstens ein Pipettiersystem zur Durchführung der an der wenigstens einen Pipettierstation und/oder der wenigstens einen Waschstation durchzuführenden Reaktionsschritte des Einzelimmunoassays,
(e) wenigstens ein Reservoir zur Bereitstellung der an der wenigstens einen Pipettierstation und/oder der wenigstens einen Waschstation benötigten Wasch- und/oder Spüllösung,
(f) wenigstens ein Mittel zur Auswertung des Einzelimmunoassays an der wenigstens einen Detektionsstation, und
(g) wenigstens ein Mittel zur vollautomatischen Steuerung des Einzelimmunoassays.

Die erfindungsgemäße Vorrichtung eignet sich für die vollautomatische Durchführung eines Einzelimmunoassays zum Nachweis einer beliebigen biologisch aktiven Substanz in einer Probe, wie beispielsweise eines Antikörpers, eines Antigens, eines Haptens, eines Hormons, eines Pharmakon, eines Opiats sowie eines diagnostisch wichtigen Proteins. Vorzugsweise ist die Vorrichtung für die vollautomatische Durchführung eines Einzelimmunoassays zum Nachweis eines Antikörpers oder Antigens in einer Probe geeignet. Besonders bevorzugt handelt es sich bei dem mit Hilfe des Einzelimmunoassay nachzuweisenden Antikörper um einen Autoimmunantikörper. Geeignete Autoimmunantikörper, welche mit Hilfe der erfindungsgemäßen Vorrichtung nachgewiesen werden können, sind dem Fachmann gut bekannt.

Die erfindungsgemäße Vorrichtung, geeignet für die vollautomatische Durchführung eines Einzelimmunoassays zum Nachweis einer biologisch aktiven Substanz in einer Probe, umfasst ein Mittel (a) zur Aufnahme wenigstens eines Probestreifens. Vorzugsweise kann das Mittel (a) bis zu 30 Probestreifen aufnehmen, d.h. 1, 2, 3, 4, 5, 6, 7, 8, 9, 10, 11, 12, 13, 14, 15, 16, 17, 18, 19, 20, 21, 22, 23 ,24 ,25, 26, 27, 28, 29 oder 30 Probestreifen. In einer besonders bevorzugten Ausführungsform der vorliegenden Erfindung ist das Mittel (a) ein Drehteller. Der Drehteller ist erfindungsgemäß so ausgeführt, dass er die einzelnen Probestreifen sicher und stabil aufnehmen kann. Beispielsweise weist der Drehteller Vertiefungen zur Aufnahme der einzelnen Probestreifen auf, in denen die Probestreifen während des gesamten Einzelimmunoassays sicher und stabil gehalten werden. Erfindungsgemäß weist der wenigstens eine Probestreifen, der zur Aufnahme in das Mittel (a) der erfindungsgemäßen Vorrichtung bestimmt ist, in ausschließlich linearer Anordnung wenigstens fünf Kavitäten auf, von denen wenigsten eine Kavität (i) zur Bereitstellung der zu untersuchenden Probe, wenigstens eine weitere Kavität (ii) als Reaktionsraum zur Durchführung des Einzelimmunoassays, wenigstens eine weitere Kavität (iii) als Reaktionsreagenzienreservoir zur Bereitstellung des (der) für den Einzelimmunoassay benötigten Reaktionsreagenzes (Reaktionsreagenzien) und gegebenenfalls wenigstens eine weitere Kavität (iv) zur Bereitstellung einer Kontrollsubstanz dienen. Der Ausdruck "in ausschließlich linearer Anordnung" ist gemäß der vorliegenden Erfindung so zu verstehen, dass sich alle auf dem Probestreifen befindlichen Kavitäten ausschließlich in linearer Anordnung zueinander befinden.

Die wenigstens eine Kavität (i) des Probestreifens dient zur Bereitstellung der zu untersuchenden Probe. In einer bevorzugten Ausführungsform der vorliegenden Erfindung weist die wenigstens eine Kavität (i) eine sich zum Boden verjüngende Form auf, um die Durchführung eines Einzelimmunoassays selbst bei sehr geringen Probenvolumina zu ermöglichen.

Die wenigstens eine Kavität (ii) des Probestreifens dient als Reaktionsraum zur Durchführung des Einzelimmunoassays. Vorzugsweise ist die wenigstens eine Kavität (ii) des Probestreifens in Abhängigkeit von dem durchzuführenden Einzelimmunoassay mit , einem geeigneten Bindungspartner beschichtet, der unter den Reaktionsbedingungen des durchzuführenden Einzelimmunoassays eine Bindung mit der nachzuweisenden, biologisch aktiven Substanz eingehen kann. Erfindungsgemäß ist der Bindungspartner in Abhängigkeit von dem durchzuführenden Einzelimmunoassay und der nachzuweisenden, biologisch aktiven Substanz ausgewählt aus Antigenen, Antikörpern, Rezeptoren, Substraten und Substratanaloga, Inhibitoren, Cofaktoren, etc. Dient die Vorrichtung für die vollautomatische Durchführung eines Einzelimmunoassays zum Nachweis eines Antikörpers, so ist der Bindungspartner das entsprechende Antigen zu dem nachzuweisenden Antikörper.

Ferner dient die wenigstens eine Kavität (iii) des Probestreifens als Reaktionsreagenzienreservoir zur Bereitstellung des (der) für den Einzelimmunoassay benötigten Reaktionsreagenzes (Reaktionsreagenzien). Gemäß der vorliegenden Erfindung dient die wenigstens eine Kavität (iii) zur Bereitstellung aller für den Einzelimmunoassay benötigten Reaktionsreagenzien mit Ausnahme der für die Durchführung des Einzelimmunoassays benötigten Wasch- und/oder Spüllösung, wobei sich jedes einzelne Reaktionsreagenz in einer separaten Kavität (iii) befindet. Das (Die) für den Einzelimmunoassay benötigte(n) Reaktionsreagenz(ien) kann (können) beispielsweise ein geeigneter Puffer zur Verdünnung der zu untersuchenden Probe bzw. einer Kontrollsubstanz als auch ein oder mehrere Nachweisreagenzien für die Nachweisreaktion sein. Vorzugsweise ist das Nachweisreagenz gemäß vorliegender Erfindung ausgewählt aus einem enzymmarkierten Antigen bzw. Antikörper, der an die nachzuweisende, biologisch aktive Substanz bindet, und einem dazugehörigen, gut nachweisbaren Substrat, dessen Umsetzung durch das Enzym des enzymmarkierten Antigens bzw. Antikörpers photometrisch oder fluorimetrisch verfolgt werden kann. Beispielhafte enzymmarkierte Antigene bzw. Antikörper sowie die dazugehörigen Substrate umfassen Peroxidase-markierte Antigene bzw. Antikörper sowie Wasserstoffperoxid als Substrat. Weitere enzymmarkierte Antigene bzw. Antikörper sowie die dazugehörigen Substrate sind dem Fachmann gut bekannt.

Die vorhandene wenigstens eine Kavität (iv) des Probestreifens dient der Bereitstellung einer Kontrollsubstanz. Die Kontrollsubstanz wird in Abhängigkeit von dem durchzuführenden Einzelimmunoassay ausgewählt aus Substanzen, wie Antikörpern, Antigenen, Proteinen, etc. und dient zur Überprüfung sowie zur Kompensation von Messschwankungen des durchzuführenden Einzelimmunoassays.

In einer bevorzugten Ausführungsform der Erfindung weist der wenigstens eine Probestreifen, der zur Aufnahme in das Mittel (a) der erfindungsgemäßen Vorrichtung bestimmt ist, in ausschließlich linearer Anordnung wenigstens sieben Kavitäten, besonders bevorzugt 8 oder 12 Kavitäten auf, von denen eine Kavität (i) zur Bereitstellung der zu untersuchenden Probe, zwei Kavitäten (ii) als Reaktionsraum zur Durchführung des Einzelimmunoassays mit der zu untersuchenden Probe als auch mit einer Kontrollsubstanz, drei Kavitäten (iii) als Reaktionsreagenzienreservoirs zur Bereitstellung der für den Einzelimmunoassay benötigten Reaktionsreagenzien und eine Kavität (iv) zur Breitstellung der Kontrollsubstanz dienen. Vorzugsweise dient eine erste Kavität (iii) zur Bereitstellung eines Probenverdünnungspuffers, eine zweite Kavität (iii) zur Bereitstellung eines ersten Nachweisreagenzes, wie eines enzymmarkierten Antigens oder Antikörpers, und eine dritte Kavität (iii) zur Bereitstellung eines zweiten Nachweisreagenzes, wie eines Substrats zum Nachweis des an die nachzuweisende, biologisch aktive Substanz gebundenen, enzymmarkierten Antigens oder Antikörpers.

In einer weiteren bevorzugten Ausführungsform der Erfindung ist der Probestreifen, der zur Aufnahme in das Mittel (a) der erfindungsgemäßen Vorrichtung bestimmt ist, ein Längs- oder Querstreifen einer Mikrotiterplatte im 96er Format mit 12 bzw. 8 Kavitäten.

Ferner ist der Probestreifen gemäß der Erfindung mit einer Folie versiegelt. Vorzugsweise weist die Folie ein oder mehrere Perforationen auf, so dass sie vor der Aufnahme des Probestreifens in das Mittel (a) zumindest teilweise, d.h. im Bereich einzelner Kavitäten, leicht zu entfernen ist. Besonders bevorzugt weist die Folie ein oder mehrere Perforationen dergestalt auf, dass die Folie vor der Aufnahme des Probestreifens in das Mittel (a) über den Kavitäten (i) und/oder (ii) entfernt werden kann. Erfolgt die Nachweisreaktion des Einzelimmunoassays durch eine Farbreaktion, so muss die Folie über den Kavitäten (ii) unbedingt zu entfernen sein, um eine vernünftige Auslesung der Farbreaktion durch die erfindungsgemäße Vorrichtung zu gewährleisten. Alle anderen Kavitäten sollten jedoch mit der Folie versiegelt bleiben, um unnötige Kontaminationen der Reaktionsreagenzien und der Kontrollsubstanz zu verhindern. Des Weiteren sieht die vorliegende Erfindung vor, dass die Folie auch einen Einzelimmunoassay-spezifischen Code aufweist. Vorzugsweise befindet sich der Einzelimmunoassay-spezifische Code auf einem Bereich der Folie, der vor der Aufnahme des Probestreifens in das Mittel (a) nicht entfernt wird. Besonders bevorzugt befindet sich der Einzelimmunoassay-spezifische Code über den Kavitäten (iii) und (iv). In diesem Fall ist die Folie so beschaffen, dass das Pipettiersystem die Folie während des Einzelimmunoassays durchstoßen kann. Gemäß vorliegender Erfindung dient der Einzelimmunoassay-spezifische Code zur automatischen Erkennung des durchzuführenden Einzelimmunoassays durch die erfindungsgemäße Vorrichtung und/oder zur Speicherung der Kalibrierungskurve des durchzuführenden Einzelimmunoassays. Der Einzelimmunoassay-spezifische Code kann jeder dem Fachmann geläufige Code sein. Vorzugsweise ist der Einzelimmunoassay-spezifische Code ein Barcode.

Die erfindungsgemäße Vorrichtung umfasst ferner ein Mittel (b), um den wenigstens einen Probestreifen entlang einer Transferroute zu unterschiedlichen Reaktionsstationen des Einzelimmunoassays zu transportieren. Vorzugsweise umfasst das Mittel (b) einen Motor zur Steuerung des Mittels (a) zur Aufnahme des wenigstens einen Probestreifens, so dass der von dem Mittel (a) aufgenommene wenigstens eine Probestreifen gezielt zu den unterschiedlichen Reaktionsstationen des Einzelimmunoassays transportiert werden kann. Erfindungsgemäß umfassen die unterschiedlichen Reaktionsstationen des Einzelimmunoassays wenigstens eine Decodierstation, um einen Einzelimmunoassay-spezifischen

Code zu decodieren und gegebenenfalls die vollautomatische Durchführung des Einzelimmunoassays zu starten, wenigstens eine Pipettierstation, um die für den Einzelimmunoassay notwendigen Reaktionsreagenzien zu dem Reaktionsansatz zuzugeben und gegebenenfalls wieder zu entfernen, wenigstens eine Waschstation, um nichtgebundene Substanzen während der einzelnen Reaktionsschritte des Einzelimmunoassays zu entfernen und das Pipettiersystem der wenigstens einen Pipettierstation zu spülen, und wenigstens eine Detektionsstation, um die nachzuweisende, biologisch aktive Substanz zu detektieren und die erhaltenen Messwerte rechnerisch aufzubereiten. Besonders bevorzugt umfassen die unterschiedlichen Reaktionsstationen des Einzelimmunoassays eine Decodierstation, eine erste Pipettierstation, um die zu untersuchende Probe und gegebenenfalls eine Kontrollsubstanz in die Kavitäten (ii) zu überführen und falls notwenig mit einem Verdünnungspuffer zu verdünnen, eine erste Waschstation, um nicht gebundene Bestandteile der Probe und gegebenenfalls der Kontrollsubstanz auszuwaschen, eine zweite Pipettierstation, um ein Nachweisreagenz in die Kavitäten (ii) zu überführen und eine Detektionsstation. Besteht das Nachweisreagenz aus einem enzymmarkierten Antigen oder Antikörper und dem dazugehörigen Substrat, so umfassen die unterschiedlichen Reaktionsstationen .des Einzelimmunoassays zusätzlich nach der zweiten Pipettierstation eine zweite Waschstation, um nicht gebundenes, enzymmarkiertes Antigen oder nicht gebundenen, enzymmarkierten Antikörper auszuwaschen und eine dritte Pipettierstation, um das Substrat in die Kavitäten (ii) zu überführen.

Ferner umfasst die erfindungsgemäße Vorrichtung wenigstens ein Mittel (c) zur Decodierung eines Einzelimmunoassay-spezifischen Codes an der wenigstens einen Decodierstation. Herkömmliche Systeme zur Decodierung eines auf dem Probestreifen aufgebrachten Einzelimmunoassay-spezifischen Codes sind dem Fachmann gut bekannt. Vorzugsweise handelt es sich bei dem Mittel (c) um ein herkömmliches System zur Decodierung von Barcodes.

Die erfindungsgemäße Vorrichtung umfasst zudem wenigstens ein Pipettiersystem (d) zur Durchführung der an der wenigstens einen Pipettierstation und/oder der wenigstens einen Waschstation durchzuführenden Reaktionsschritte des Einzelimmunoassays.

Die erfindungsgemäße Vorrichtung umfasst auch wenigstens ein Reservoir (e) zur Bereitstellung der an der wenigstens einen Pipettierstation und/oder der wenigstens einen Waschstation benötigten Wasch- und/oder Spüllösung. Während die übrigen für den jeweils durchzuführenden Einzelimmunoassay benötigten Reaktionsreagenzien in dem Probestreifen bereitgestellt werden, sieht die vorliegende Erfindung vor, dass die Wasch- und/oder Spüllösung, welche für die verschiedensten mit der Vorrichtung durchführbaren Einzelimmunoassays verwendet werden kann, der Einfachheit halber in einem Reservoir in der Vorrichtung und nicht auf dem Probestreifen bereitgestellt wird.

Des Weiteren umfasst die erfindungsgemäße Vorrichtung wenigstens ein Mittel (f) zur Auswertung des Einzelimmunoassays an der wenigstens einen Detektionsstation. Das wenigstens eine Mittel (f) ist gemäß vorliegender Erfindung ausgewählt aus einem Photometer, einem Fluorimeter, einem Computer mit dazugehöriger Software, etc. Vorzugsweise weist die erfindungsgemäße Vorrichtung wenigstens zwei Mittel (f) zur Auswertung des Einzelimmunoassays auf, darunter ein Photometer oder Fluorimeter, mit welchem z.B. die Umsetzung des Substrats durch das enzymmarkierte Antigen oder den enzymmarkierten Antikörper photometrisch oder fluorimetrisch verfolgt werden kann, und ein Computer mit dazugehöriger Software, welcher eine Auswertung der Messdaten auch unter Berücksichtigung eines Abgleichs mit der auf dem Probestreifen gespeicherten Kalibrierungskurve sowie den gegebenenfalls gemessenen Kontrollwerten vornimmt.

Schließlich umfasst die erfindungsgemäße Vorrichtung wenigstens ein Mittel (g) zur vollautomatischen Steuerung des Einzelimmunoassays. Vorzugsweise ist das Mittel (g) ein Computer mit dazugehöriger Software. Besonders bevorzugt ist das Mittel (g) der gegebenenfalls an der wenigstens einen Detektionsstation vorhandene Computer.

Der wesentliche Vorteil der erfindungsgemäßen Vorrichtung verglichen mit bestehenden Technologien, liegt in der Konzentration des gesamten Einzelimmunoassays auf den gegebenenfalls versiegelten Probestreifen. In diesem Streifen sind alle Reaktionsreagenzien bis auf die Wasch- und/oder Spüllösung als auch die Festphase des Einzelimmunoassays enthalten. Ferner ist die für die. Auswertung des Einzelimmunoassays benötigte Kalibrierungskurve auf dem Probestreifen gespeichert. Somit stellt die vorliegende Erfindung einen äußerst bedienungsfreundlichen und wartungsarmen Immunoassay-Analyser bereit, der eine einfache, flexible, schnelle und reproduzierbare Durchführung eines Immunoassays mit einer einzelnen Probe ermöglicht, einen geringen Platzbedarf aufweist und insbesondere für die Autoimmundiagnostik geeignet ist.

Ein weiterer Gegenstand der Erfindung betrifft die Verwendung der erfindungsgemäßen Vorrichtung zur vollautomatischen Durchführung eines Einzelimmunoassays zum Nachweis einer biologisch aktiven Substanz in einer Probe, umfassend die Schritte:
(a) Vorbereiten des wenigstens einen Probestreifens,
(b) Einlegen des wenigstens einen Probestreifens in die Vorrichtung,
(c) Überführen der Probe aus der wenigstens einen Kavität (i) in eine Kavität (ii) und gegebenenfalls einer Kontrollsubstanz aus der wenigstens einen Kavität (iv) in eine weitere Kavität (ii),
(d) Inkubieren der Probe und gegebenenfalls einer Kontrollsubstanz in der (den) Kavität(en) (ii),
(e) Waschen der Kavität(en) (ii) mit in der Vorrichtung bevorrateter Wasch- und/oder Spüllösung,
(f) Überführen von in dem Probestreifen bevorratetem Nachweisreagenz aus der wenigstens einen Kavität (iii) in die Kavität(en) (ii), und
(g) Detektieren der nachzuweisenden, biologisch aktiven Substanz.

Die erfindungsgemäße Verwendung umfasst in Schritt (a) das Vorbereiten des wenigstens einen Probestreifens. Dabei umfasst das Vorbereiten des wenigstens einen Probestreifens das Beschichten der wenigstens einen Kavität (ii) mit einem geeigneten Bindungspartner für die nachzuweisende, biologisch aktive Substanz, das Einbringen der zu untersuchenden Probe in die wenigstens eine Kavität (i) des Probestreifens, das Einbringen der für den durchzuführenden Einzelimmunoassay benötigten Reaktionsreagenzien bis auf die benötigte Wasch- und/oder Spüllösung in die wenigstens eine Kavität (iii) des Probestreifens und gegebenenfalls das Einbringen einer Kontrollsubstanz in die wenigstens eine Kavität (iv) des Probestreifens. In einer bevorzugten Ausführungsform der Erfindung handelt es sich bei dem vorzubereitenden Probestreifen um einen mit einer Folie versiegelten Probestreifen, dessen wenigstens eine Kavität (ii) bereits mit einem geeigneten Bindungspartner beschichtet ist und dessen wenigstens eine Kavität (iii) und gegebenenfalls wenigstens eine Kavität (iv) bereits das (die) für den durchzuführenden Einzelimmunoassay benötigte(n) Reaktionsreagenz(ien) und gegebenenfalls eine Kontrollsubstanz enthalten. Diesbezüglich sieht die vorliegende Erfindung vor, dass das Vorbereiten des wenigstens einen Probestreifens das Entferner der Folie des versiegelten Probestreifens wenigstens im Bereich der wenigstens eine Kavität (i) und/oder der wenigstens einen Kavität (ii), sowie das Einbringen der zu untersuchenden Probe in die wenigstens eine Kavität (i) des Probestreifens umfasst. Im Bereich der anderen Kavitäten und insbesondere in dem Fall, in dem die Folie im Bereich der wenigstens einen Kavität (iii) und (iv) einen Einzelimmunoassay-spezifischen Code aufweist, kann der Probestreifen während der Durchführung des Einzelimmunoassays mit der Folie versiegelt bleiben. Dies hat den Vorteil, dass eine unerwünschte Kontamination ausgeschlossen werden kann.

Die erfindungsgemäße Verwendung umfasst ferner in den Schritten (b) bis (f) das Einlegen des wenigstens einen Probestreifens in die Vorrichtung, das Überführen der Probe aus der wenigstens einen Kavität (i) in eine Kavität (ii) und gegebenenfalls einer Kontrollsubstanz aus der wenigstens einen Kavität (iv) in eine weitere Kavität (ii), das Inkubieren der Probe und gegebenenfalls einer Kontrollsubstanz in der (den) Kavität(en) (ii), das Waschen der Kavität(en) (ii) mit in der Vorrichtung bevorrateter Wasch- und/oder Spüllösung, das Überführen von in dem Probestreifen bevorratetem Nachweisreagenz aus der wenigstens einen Kavität (iii) in die Kavität(en) (ii), sowie das Detektieren der nachzuweisenden, biologisch aktiven Substanz. Alle diese Schritte, bis auf das Einlegen des wenigstens einen Probestreifens erfolgen durch die erfindungsgemäße Vorrichtung vollautomatisch. Vorzugsweise erfolgt das Inkubieren der Probe und gegebenenfalls einer Kontrollsubstanz in der (den) Kavität(en) (ii) für 1-30 Minuten, besonders bevorzugt für 1 bis 15 Minuten. Ferner erfolgt das Detektieren der nachzuweisenden, biologisch aktiven Substanz über einen Zeitraum von 1 bis 15, vorzugsweise von 1 bis 5 Minuten.

Vorzugsweise umfasst die erfindungsgemäße Verwendung alle Reaktionsschritte, welche üblicherweise für die Durchführung eines Immunoassays benötigt werden. Dabei ist es bevorzugt, dass alle Reaktionsschritte in einer Zeitdauer von 60, vorzugsweise 45 Minuten, bei voller Beladung des Drehtellers durchgeführt werden.

In einer besonders bevorzugten Ausführungsform ist die biologisch aktive Substanz ein Antigen oder Antikörper.

Die vorliegende Erfindung sieht für jeden beliebigen, mit der erfindungsgemäßen Vorrichtung durchzuführenden Einzelimmunoassay einen speziellen, mit einer Folie versiegelten Probestreifen vor, dessen wenigstens eine Kavität (ii) bereits mit einem geeigneten Bindungspartner beschichtet ist und dessen wenigstens eine Kavität (iii) und gegebenenfalls wenigstens eine Kavität (iv) bereits mit dem (den) für den durchzuführenden Einzelimmunoassay benötigten Reaktionsreagenz(ien) und gegebenenfalls mit einer Kontrollsubstanz beladen ist.

Noch ein weiterer Gegenstand der vorliegenden Erfindung betrifft die Verwendung des erfindungsgemäßen Probestreifens zur Durchführung eines Einzelimmunoassays zum Nachweis einer biologisch aktiven Substanz in einer Probe. Die-Verwendung erfolgt in einer erfindungsgemäßen Vorrichtung, geeignet zur Durchführung eines Einzelimmunoassays zum Nachweis einer biologisch aktiven Substanz in einer Probe. Besonders bevorzugt ist die biologisch aktive Substanz ein Antigen oder Antikörper.

Zudem wird ein Kit beschrieben zur Durchführung eines Einzelimmunoassays zum Nachweis einer biologisch aktiven Substanz in einer Probe, umfassend einen erfindungsgemäßen Probestreifen. Vorzugsweise dient das Kit zur Durchführung eines Einzelimmunoassays zum Nachweis eines Antigens oder Antikörpers in einer Probe.

Schließlich wird die Verwendung eines erfindungsgemäßen Kits beschrieben zur Durchführung eines Einzelimmunoassays zum Nachweis einer biologisch aktiven Substanz in einer Probe. Vorzugsweise erfolgt die Verwendung in einer erfindungsgemäßen Vorrichtung, geeignet zur Durchführung eines Einzelimmunoassays zum Nachweis einer biologisch aktiven Substanz in einer Probe.

Weiterhin soll die Erfindung durch die nachfolgenden Figuren näher veranschaulicht werden.

### Figuren

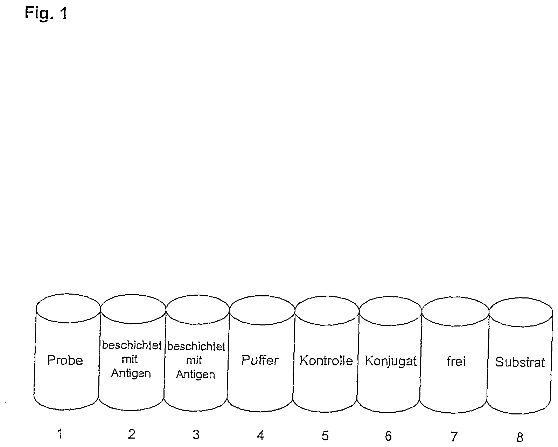

**Figur 1** zeigt eine schematische Abbildung eines erfindungsgemäßen Probestreifens mit acht Kavitäten und einer beispielhaften Belegung derselben. Die Kavität Nr. 1 entspricht einer Kavität (i), die Kavitäten Nr. 2
   und 3 einer Kavität (ii), die Kavitäten Nr. 4 bis 7 einer Kavität (iii) und die Kavität Nr. 8 einer Kavität (iv).

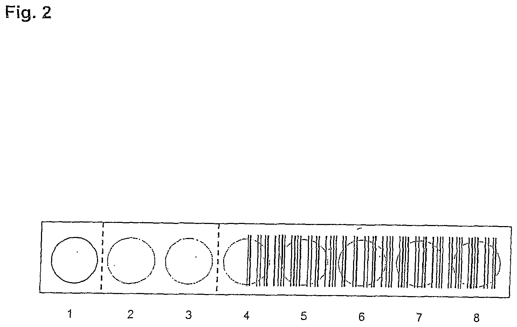

**Figur 2** zeigt eine schematische Abbildung eines erfindungsgemäßen, mit einer Folie versiegelten Probestreifens mit Barcode. Die Folie im Bereich der Kavität Nr. 1 ist zur Befüllung mit der zu untersuchenden Probe bereits abgezogen.

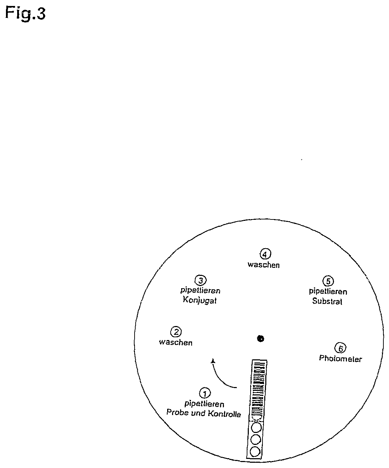

**Figur 3** zeigt eine schematische Abbildung eines Mittels (a) einer erfindungsgemäßen Vorrichtung, wobei die Transferroute des Probestreifens zu den unterschiedlichen Reaktionsstationen des Einzelimmunoassays durch die Stationen 1 bis 6 angezeigt ist. Insgesamt sind folgende Reaktionsschritte an den Reaktionsstationen beispielhaft veranschaulicht: 1: Probe in Kavität (i) mit Verdünnungspuffer aus einer Kavität (iii) verdünnen und in eine Kavität (ii) pipettieren. Ferner Kontrollsubstanz aus Kavität (iv) in eine weitere Kavität (ii) pipettieren. 2: Waschen der beiden Kavitäten (ii) mit in der Vorrichtung bevorrateter Wasch- und/oder Spüllösung, um nicht gebundene Bestandteile zu entfernen. 3: Enzymmarkiertes Antigen/enzymmarkierter Antikörper aus einer weiteren Kavität (iii) (Teil 1 des Nachweisreagenzes) in die beiden Kavitäten (ii) pipettieren. 4: Waschen der beiden Kavitäten (ii) mit in der Vorrichtung bevorrateter Wasch- und/oder Spüllösung, um nicht gebundene Bestandteile zu entfernen. 5: Substrat aus einer weiteren Kavität (iii) (Teil 2 des Nachweisreagenzes) in die beiden Kavitäten (ii) pipettieren. 6: Photometrische Messung der Enzym-Substrat-Reaktion in beiden Kavitäten (ii).

## Patentansprüche

1. Vorrichtung, geeignet für die vollautomatische Durchführung eines Einzelimmunoassays zum Nachweis einer biologisch aktiven Substanz in einer Probe unter Verwendung eines Probestreifens,
wobei der Probestreifen einen Teil der Vorrichtung darstellt und in ausschließlich linearer Anordnung wenigstens fünf
Kavitäten umfasst, von denen wenigstens eine Kavität (i) zur Bereitstellung der zu untersuchenden Probe, wenigstens eine weitere Kavität (ii) als Reaktionsraum zur Durchführung des Einzelimmunoassays, wenigstens eine weitere Kavität (iii) als Reaktionsreagenzienreservoir zur Bereitstellung des (der) für den Einzelimmunoassay benötigten Reaktionsreagenzes (Reaktionsreagenzien) und wenigstens eine weitere Kavität (iv) zur Bereitstellung einer Kontrollsubstanz dienen, wobei der Probestreifen mit einer Folie versiegelt ist, die Folie einen Einzelimmunoassay-spezifischen Code aufweist, der Code zur Erkennung des durchzuführenden Einzelimmunoassays und zur Speicherung der Kalibrierungskurve des durchzuführenden Einzelimmunoassyas dient, und
wobei die Vorrichtung umfasst
(a) ein Mittel zur Aufnahme wenigstens eines Probestreifens,
(b) ein Mittel, um den wenigstens einen Probestreifen entlang einer Transferroute zu unterschiedlichen Reaktionsstationen des Einzelimmunoassays zu transportieren, wobei die Reaktionsstationen wenigstens eine Decodierstation, wenigstens eine Pipettierstation, wenigstens eine Waschstation und wenigstens eine Detektionsstation umfassen,
(c) wenigstens ein Mittel zur Decodierung eines Einzelimmunoassay-spezifischen Codes an der wenigstens einen Decodierstation,
(d) wenigstens ein Pipettiersystem zur Durchführung der an der wenigstens einen Pipettierstation und/oder der wenigstens einen Waschstation durchzuführenden Reaktionsschritte des Einzelimmunoassays,
(e) wenigstens ein Reservoir zur Bereitstellung der an der wenigstens einen Pipettierstation und/oder der wenigstens einen Waschstation benötigten Wasch- und/oder Spüllösung,
(f) wenigstens ein Mittel zur Auswertung des Einzelimmunoassays an der wenigstens einen Detektionsstation, und
(g) wenigstens ein Mittel zur vollautomatischen Steuerung des Einzelimmunoassays.

2. Vorrichtung nach Anspruch 1,
**dadurch gekennzeichnet,**
**dass** die biologisch aktive Substanz ausgewählt ist aus einem Antikörper, einem Antigen, einem Hapten, einem Hormon, einem Pharmakon, einem Opiat und einem diagnostisch wichtigen Protein.

3. Vorrichtung nach Anspruch 1 oder 2,
**dadurch gekennzeichnet,**
**dass** die biologisch aktive Substanz ein Autoimmunantikörper ist.

4. Vorrichtung nach einem der Ansprüche 1 bis 3,
**dadurch gekennzeichnet,**
**dass** das Mittel (a) zur Aufnahme wenigstens eines Probestreifens ein Drehteller ist.

5. Vorrichtung nach einem der Ansprüche 1 bis 4,
**dadurch gekennzeichnet,**
**dass** der Drehteller die Aufnahme von bis zu 30 Probestreifen vorsieht.

6. Vorrichtung nach einem der Ansprüche 1 bis 5,
**dadurch gekennzeichnet,**
**dass** das Mittel (b) zum Transport des wenigstens einen Probenstreifen einen Motor umfasst.

7. Vorrichtung nach einem der Ansprüche 1 bis 6,
**dadurch gekennzeichnet,**
**dass** das wenigstens eine Mittel (f) zur Auswertung des Einzelimmunoassays ausgewählt ist aus einem Photometer, einem Fluorimeter und einem Computer mit dazugehöriger Software.

8. Vorrichtung nach einem der Ansprüche 1-7,
**dadurch gekennzeichnet,**
**dass** der Probestreifen in ausschließlich linearer Anordnung 8 Kavitäten aufweist, von denen eine Kavität (i) zur Bereitstellung der zu untersuchenden Probe, zwei Kavitäten (ii) als Reaktionsraum zur Durchführung des Einzelimmunoassays, vier Kavitäten (iii) als Reaktionsreagenzienreservoir zur Bereitstellung des (der) für den Einzelimmunoassay benötigten Reaktionsreagenzes (Reaktionsreagenzien) und eine Kavität (iv) zur Bereitstellung einer Kontrollsubstanz dienen.

9. Vorrichtung nach einem der Ansprüche 1 oder 8,
**dadurch gekennzeichnet,**
**dass** die wenigstens eine Kavität (ii) des Probestreifens, welche als Reaktionsraum zur Durchführung des Einzelimmunoassays dient, mit einem geeigneten Bindungspartner, welche unter den Reaktionsbedingungen des Einzelimmunoassays eine Bindung mit der nachzuweisenden, biologisch aktiven Substanz eingeht, beschichtet ist.

10. Vorrichtung nach einem der Ansprüche 1 bis 9
**dadurch gekennzeichnet,**
**dass** die wenigstens eine Kavität (iii) des Probestreifens alle für den Einzelimmunoassay erforderlichen Reaktionsreagenzien mit Ausnahme eines Wasch- und/oder Spülpuffers enthält.

11. Vorrichtung nach Anspruch 10,
**dadurch gekennzeichnet,**
**dass** die für den Einzelimmunoassay erforderlichen Reaktionsreagenzien ausgewählt sind aus einem Puffer zum Verdünnen der zu untersuchenden Probe und gegebenenfalls der Kontrollsubstanz und wenigstens einem Nachweisreagenz für die Nachweisreaktion.

12. Vorrichtung nach Anspruch 11,
**dadurch gekennzeichnet,**
**dass** das Nachweisreagenz ein enzymmarkiertes Antigen oder einen enzymmarkierten Antikörper und ein geeignetes Substrat, welches von dem Enzym des enzymmarkierten Antigens oder Antikörpers umgesetzt wird und photometrisch oder fluorimetrisch nachweisbar ist, umfasst.

13. Vorrichtung nach einem der Ansprüche 1 bis 12,
**dadurch gekennzeichnet,**
**dass** die Folie des Probestreifens Perforationen aufweist, so dass die Folie über den Kavitäten (i) und/oder (ii) vor Aufnahme des Probenstreifens in das Mittel (a) leicht zu entfernen ist.

14. Vorrichtung nach einem der Ansprüche 1 bis 13,
**dadurch gekennzeichnet,**
**dass** sich der Einzelimmunoassay-spezifische Code vorzugsweise über den Kavitäten (iii) und (iv) befindet.

15. Vorrichtung nach einem der Ansprüche 1 bis 14,
**dadurch gekennzeichnet,**
**dass** der Einzelimmunoassay-spezifische Code ein Barcode ist.

16. Verwendung einer Vorrichtung nach einem der Ansprüche 1 bis 15 zur vollautomatischen Durchführung eines Einzelimmunoassays zum Nachweis eines Antikörpers in einer Probe, umfassend die Schritte:
(a) Vorbereiten des wenigstens einen Probestreifens
(b) Einlegen des wenigstens einen Probestreifens in die Vorrichtung,
(c) Überführen der Probe aus der wenigstens einen Kavität (i) in eine Kavität (ii) und gegebenenfalls einer Kontrollsubstanz aus der wenigstens einen Kavität (iv) in eine weitere Kavität (ii),
(d) Inkubieren der Probe und gegebenenfalls einer Kontrollsubstanz in der (den) Kavität(en) (ii)
(e) Waschen der Kavität(en) (ii) mit in der Vorrichtung bevorrateter Wasch- und/oder Spüllösung
(f) Überführen von in dem Probestreifen bevorratetem Nachweisreagenz aus der wenigstens einen Kavität (iii) in die Kavität(en) (ii), und
(g) Detektieren der nachzuweisenden, biologisch aktiven Substanz.

17. Verwendung eines Probestreifens zur Durchführung eines Einzelimmunoassays zum Nachweis einer biologisch aktiven Substanz in einer Probe in einer Vorrichtung nach einem der Ansprüche 1 bis 15,
**dadurch gekennzeichnet,**
**dass** der Probestreifen in ausschließlich linearer Anordnung wenigstens fünf Kavitäten umfasst, von denen wenigstens eine Kavität (i) zur Bereitstellung der zu untersuchenden Probe, wenigstens eine weitere Kavität (ii) als Reaktionsraum zur Durchführung des Einzelimmunoassays, wenigstens eine weitere Kavität (iii) als Reaktionsreagenzienreservoir zur Bereitstellung des (der) für den Einzelimmunoassay benötigten Reaktionsreagenzes (Reaktionsreagenzien) und wenigstens eine weitere Kavität (iv) zur Bereitstellung einer Kontrollsubstanz dienen, wobei der Probestreifen mit einer Folie versiegelt ist, die Folie einen Einzelimmunoassay-spezifischen Code aufweist, der Code zur Erkennung des durchzuführenden Einzelimmunoassays und zur Speicherung der Kalibrierungskurve des durchzuführenden Einzelimmunoassyas dient.

## Claims

1. Device suitable for carrying out, fully automatically, an individual immunoassay in order to detect a biologically active substance in a sample using a sample strip, wherein the sample strip is part of the device and comprises, in an exclusively linear arrangement, at least five cavities, of which at least one cavity (i) is used for providing the sample to be tested, at least one further cavity (ii) is used as a reaction chamber for carrying out the individual immunoassay, at least one further cavity (iii) is used as a reaction reagent reservoir for providing the reaction reagent(s) required for the individual immunoassay, and at least one further cavity (iv) is used for providing a control substance, wherein the sample strip is sealed with a film, the film has an individual-immunoassay-specific code, and the code is used to identify the individual immunoassay to be carried out and to store the calibration curve of the individual immunoassay to be carried out, and
wherein the device comprises
(a) a means for receiving at least one sample strip,
(b) a means for transporting the at least one sample strip along a transfer route to various reaction stations of the individual immunoassay, wherein the reaction stations comprise at least one decoding station, at least one pipetting station, at least one washing station and at least one detection station,
(c) at least one means for decoding an individual-immunoassay-specific code at the at least one decoding station,
(d) at least one pipetting station for carrying out the reaction steps of the individual immunoassay to be carried out at the at least one pipetting station and/or the at least one washing station,
(e) at least one reservoir for providing the washing and/or rinsing solution required at the at least one pipetting station and/or the at least one washing station,
(f) at least one means for analysing the individual immunoassay at the at least one detection station, and
(g) at least one means for fully automatic control of the individual immunoassay.

2. Device according to claim 1, **characterised in that** the biologically active substance is selected from an antibody, an antigen, a hapten, a hormone, a pharmacon, an opiate and a diagnostically significant protein.

3. Device according to either claim 1 or claim 2, **characterised in that** the biologically active substance is an autoimmune antibody.

4. Device according to any of claims 1 to 3, **characterised in that** the means (a) for receiving at least one sample strip is a rotary table.

5. Device according to any of claims 1 to 4, **characterised in that** the rotary table provides for the receipt of up to 30 sample strips.

6. Device according to any of claims 1 to 5, **characterised in that** the means (b) for transporting the at least one sample strip comprises a motor.

7. Device according to any of claims 1 to 6, **characterised in that** the at least one means (f) for analysing the individual immunoassay is selected from a photometer, a fluorimeter and a computer having associated software.

8. Device according to any of claims 1-7, **characterised in that** the sample strip has, in an exclusively linear arrangement, 8 cavities, of which one cavity (i) is used for providing the sample to be tested, two cavities (ii) are used as a reaction chamber for carrying out the individual immunoassay, four cavities (iii) are used as a reaction reagent reservoir for providing the reaction reagent(s) required for the individual immunoassay, and one cavity (iv) is used for providing a control substance.

9. Device according to either claim 1 or claim 8, **characterised in that** the at least one cavity (ii) in the sample strip, which cavity is used as a reaction chamber for carrying out the individual immunoassay, is coated with a suitable binding partner which, under the reaction conditions of the individual immunoassay, will bind to the biologically active substance to be detected.

10. Device according to any of claims 1 to 9, **characterised in that** the at least one cavity (iii) in the sample strip contains all the reaction reagents required for the individual immunoassay, with the exception of a washing and/or rinsing buffer.

11. Device according to claim 10, **characterised in that** the reaction reagents required for the individual immunoassay are selected from a buffer for thinning the sample to be tested and optionally the control substance, and at least one detection reagent for the detection reaction.

12. Device according to claim 11, **characterised in that** the detection reagent comprises an enzyme-labelled antigen or an enzyme-labelled antibody and a suitable substrate that is reacted by the enzyme of the enzyme-labelled antigen or antibody and can be photometrically or fluorometrically detected.

13. Device according to any of claims 1 to 12, **characterised in that** the film of the sample strip has perforations such that the film above the cavities (i) and/or (ii) can easily be removed before the sample strip is received in the means (a).

14. Device according to any of claims 1 to 13, **characterised in that** the individual-immunoassay-specific code is located preferably above the cavities (iii) and (iv).

15. Device according to any of claims 1 to 14, **characterised in that** the individual-immunoassay-specific code is a barcode.

16. Use of a device according to any of claims 1 to 15 for carrying out, fully automatically, an individual immunoassay in order to detect an antibody in a sample, comprising the following steps:
(a) preparing the at least one sample strip,
(b) inserting the at least one sample strip into the device,
(c) transferring the sample out of the at least one cavity (i) into a cavity (ii), and optionally transferring a control substance out of the at least one cavity (iv) into a further cavity (ii),
(d) incubating the sample and optionally a control substance in the cavity (cavities) (ii),
(e) washing the cavity (cavities) (ii) with washing and/or rinsing solution stored in the device,
(f) transferring detection reagent stored in the sample strips out of the at least one cavity (iii) into the cavity (cavities) (ii), and
(g) detecting the biologically active substance to be detected.

17. Use of a sample strip for carrying out an individual immunoassay in order to detect a biologically active substance in a sample in a device according to any of claims 1 to 15, **characterised in that** the sample strip comprises, in an exclusively linear arrangement, at least five cavities, of which at least cavity (i) is used for providing the sample to be tested, at least one further cavity (ii) is used as a reaction chamber for carrying out the individual immunoassay, at least one further cavity (iii) is used as a reaction reagent reservoir for providing the reaction reagent(s) required for the individual immunoassay, and at least one further cavity (iv) is used for providing a control substance, wherein the sample strip is sealed with a film, the film has an individual-immunoassay-specific code, and the code is used to identify the individual immunoassay to be carried out and to store the calibration curve of the individual immunoassay to be carried out.

## Revendications

1. Dispositif, adapté pour la conduite automatique d'un immuno-essai individuel pour déceler une substance biologiquement active dans un échantillon en utilisant une barrette d'essai,
dans lequel la barrette d'essai constitue une partie du dispositif et comprend au moins cinq cavités en agencement exclusivement linéaire, parmi lesquelles au moins une cavité (i) sert à la mise à disposition de l'échantillon à analyser, au moins une autre cavité (ii) sert d'espace de réaction pour la conduite de l'immuno-essai individuel, au moins une autre cavité (iii) sert de réservoir de réactif de réaction pour la mise à disposition du (des) réactif de réaction (réactifs de réaction) nécessaire(s) à l'immuno-essai individuel et au moins une autre cavité (iv) sert à la mise à disposition d'une substance témoin, dans lequel la barrette d'essai est scellée par un film, le film présente un code spécifique à l'immuno-essai individuel, le code sert à la détection de l'immuno-essai individuel à conduire et à l'enregistrement de la courbe de calibration de l'immuno-essai individuel à conduire, et
dans lequel le dispositif comprend
(a) un moyen de réception d'au moins une barrette d'essai,
(b) un moyen pour transporter l'au moins une barrette d'essai le long d'un itinéraire de transfert vers différentes stations de réaction de l'immuno-essai individuel, dans lequel les stations de réaction comprennent au moins une station de décodage, au moins une station de pipetage, au moins une station de lavage et au moins une station de détection,
(c) au moins un moyen de décodage d'un code spécifique à l'immuno-essai individuel au niveau de l'au moins une station de décodage,
(d) au moins un système de pipetage pour la conduite des étapes de réaction de l'immuno-essai individuel à conduire au niveau de l'au moins une station de pipetage et/ou de l'au moins une station de lavage,
(e) au moins un réservoir pour la mise à disposition de la solution de lavage et/ou de rinçage nécessaire au niveau de l'au moins une station de pipetage et/ou de l'au moins une station de lavage,
(f) au moins un moyen d'évaluation de l'immuno-essai individuel au niveau de l'au moins une station de détection, et
(g) au moins un moyen de commande automatique de l'immuno-essai individuel.

2. Dispositif selon la revendication 1,
**caractérisé en ce**
**que** la substance biologiquement active est sélectionnée parmi un anticorps, un antigène, un haptène, une hormone, un médicament, un opiacé et une protéine importante du point de vue diagnostique.

3. Dispositif selon la revendication 1 ou 2,
**caractérisé en ce**
**que** la substance biologiquement active est un anticorps auto-immun.

4. Dispositif selon l'une quelconque des revendications 1 à 3,
**caractérisé en ce**
**que** le moyen (a) de réception d'au moins une barrette d'essai est un plateau tournant.

5. Dispositif selon l'une quelconque des revendications 1 à 4,
**caractérisé en ce**
**que** le plateau tournant prévoit la réception de jusqu'à 30 barrettes d'essai.

6. Dispositif selon l'une quelconque des revendications 1 à 5,
**caractérisé en ce**
**que** le moyen (b) de transport de l'au moins une barrette d'essai comprend un moteur.

7. Dispositif selon l'une quelconque des revendications 1 à 6,
**caractérisé en ce**
**que** l'au moins un moyen (f) d'évaluation de l'immuno-essai individuel est sélectionné parmi un photomètre, un fluorimètre et un ordinateur avec logiciel correspondant.

8. Dispositif selon l'une quelconque des revendications 1-7,
**caractérisé en ce**
**que** la barrette d'essai présente 8 cavités en agencement exclusivement linéaire, parmi lesquelles une cavité (i) sert à la mise à disposition de l'échantillon à analyser, deux cavités (ii) servent d'espace de réaction pour la conduite de l'immuno-essai individuel, quatre cavités (iii) servent de réservoir de réactif de réaction pour la mise à disposition du (des) réactif de réaction (réactifs de réaction) nécessaire(s) à l'immuno-essai individuel et une cavité (iv) sert à la mise à disposition d'une substance témoin.

9. Dispositif selon l'une quelconque des revendications 1 ou 8,
**caractérisé en ce**
**que** l'au moins une cavité (ii) de la barrette d'essai, laquelle sert d'espace de réaction pour la conduite de l'immuno-essai individuel, est revêtue d'un partenaire de liaison adapté, lequel établit une liaison avec la substance biologiquement active à déceler dans les conditions de réaction de l'immuno-essai individuel.

10. Dispositif selon l'une quelconque des revendications 1 à 9,
**caractérisé en ce**
**que** l'au moins une cavité (iii) de la barrette d'essai contient tous les réactifs de réaction nécessaires à l'immuno-essai individuel à l'exception d'un tampon de lavage et/ou de rinçage.

11. Dispositif selon la revendication 10,
**caractérisé en ce**
**que** les réactifs de réaction nécessaires à l'immuno-essai individuel sont sélectionnés parmi un tampon pour la dilution de l'échantillon à analyser et le cas échéant de la substance témoin et au moins un réactif de détection pour la réaction de détection.

12. Dispositif selon la revendication 11,
**caractérisé en ce**
**que** le réactif de détection comprend un antigène marqué par une enzyme ou un anticorps marqué par une enzyme et un substrat adapté, lequel réagit avec l'enzyme de l'antigène ou anticorps marqué par une enzyme et est décelable par voie photométrique ou fluorimétrique.

13. Dispositif selon l'une quelconque des revendications 1 à 12,
**caractérisé en ce**
**que** le film de la barrette d'essai présente des perforations, de sorte que le film au-dessus des cavités (i) et/ou (ii) soit facile à enlever avant la réception de la barrette d'essai dans le moyen (a).

14. Dispositif selon l'une quelconque des revendications 1 à 13,
**caractérisé en ce**
**que** le code spécifique à l'immuno-essai individuel se trouve de préférence au-dessus des cavités (iii) et (iv).

15. Dispositif selon l'une quelconque des revendications 1 à 14,
**caractérisé en ce**
**que** le code spécifique à l'immuno-essai individuel est un code-barres.

16. Utilisation d'un dispositif selon l'une quelconque des revendications 1 à 15 pour la conduite automatique d'un immuno-essai individuel pour déceler un anticorps dans un échantillon, comprenant les étapes de :
(a) préparation de l'au moins une barrette d'essai
(b) insertion de l'au moins une barrette d'essai dans le dispositif,
(c) transfert de l'échantillon de l'au moins une cavité (i) vers une cavité (ii) et le cas échéant d'une substance témoin de l'au moins une cavité (iv) vers une autre cavité (ii),
(d) incubation de l'échantillon et le cas échéant d'une substance témoin dans la (les) cavité(s) (ii)
(e) lavage de la (des) cavité(s) (ii) avec une solution de lavage et/ou de rinçage stockée dans le dispositif
(f) transfert de réactif de détection stocké dans la barrette d'essai de l'au moins une cavité (iii) vers la (les) cavité(s) (ii), et
(g) détection de la substance biologiquement active à déceler.

17. Utilisation d'une barrette d'essai pour la conduite d'un immuno-essai individuel pour déceler une substance biologiquement active dans un échantillon dans un dispositif selon l'une quelconque des revendications 1 à 15,
**caractérisée** en ce
la barrette d'essai comprend au moins cinq cavités en agencement exclusivement linéaire, parmi lesquelles au moins une cavité (i) sert à la mise à disposition de l'échantillon à analyser, au moins une autre cavité (ii) sert d'espace de réaction pour la conduite de l'immuno-essai individuel, au moins une autre cavité (iii) sert de réservoir de réactif de réaction pour la mise à disposition du (des) réactif de réaction (réactifs de réaction) nécessaire(s) à l'immuno-essai individuel et au moins une autre cavité (iv) sert à la mise à disposition d'une substance témoin, dans lequel la barrette d'essai est scellée par un film, le film présente un code spécifique à l'immuno-essai individuel, le code sert à la détection de l'immuno-essai individuel à conduire et à l'enregistrement de la courbe de calibration de l'immuno-essai individuel à conduire.
